Europäisches Patentamt

European Patent Office

Office européen des brevets

(11) Publication number: **0 424 943 A1**

# EUROPEAN PATENT APPLICATION

(21) Application number: 90120494.1

(22) Date of filing: 25.10.90

(51) Int. Cl.5: **B23P 5/00**, B25D 5/00

(30) Priority: 27.10.89 US 428162
14.09.90 US 582235

(43) Date of publication of application:
02.05.91 Bulletin 91/18

(84) Designated Contracting States:
CH DE ES FR GB IT LI

(71) Applicant: **Chia, Meang**
412 W. Sixth Street No. 1116
Los Angeles, California 90014(US)

Applicant: **Ta, Larry**
412 W. Sixth Street No. 1116
Los Angeles, California 90014(US)

(72) Inventor: **Chia, Meang**
412 W. Sixth Street No. 1116
Los Angeles, California 90014(US)
Inventor: **Ta, Larry**
412 W. Sixth Street No. 1116
Los Angeles, California 90014(US)

(74) Representative: **Baillie, Iain Cameron et al**
c/o Ladas & Parry Isartorplatz 5
W-8000 München 2(DE)

(54) **Jeweler's hammer bit.**

(57) The invention is a diamond-tipped bit that is used with a jeweler's hammer. The bit (2) has a shaft portion that has formed on one end a threaded portion (3) for screwing the bit into the threaded receiving portion of a jeweler's hammer. On the other end of the shaft is a bore (5). A diamond (7) is placed within the bore so that the rear flat portion (8) of the diamond is flush against the rear surface (9) of the bore. The annular rim (6) of the bore clasps the diamond around its entire circumference against the rear surface (9), leaving the working portion (10) of the diamond protruding from the shaft and the annular rim (6). The invention can be an integral piece or may be constructed to be disassembled so that the diamond can be removed and replaced.

FIG. 2

FIG. 3

## JEWELER'S HAMMER BIT

Field of the Invention

This invention pertains to the field of jewelry design implements, and more particularly to a hammer bit, used in conjunction with a hand-held hammering device, to impart design elements and patterns to precious metals.

Background of the Invention

Jewelry designers use a hand-held hammering device for designing, engraving and setting purposes. The hammer is adaptable to a number of purposes because, much like a conventional drill, it is designed to accept bits of various configurations and sizes. Some bits are flat at their extremities. These are generally used for hammering and setting purposes. For instance, in the course of "channel setting", a precious stone is placed in a channel or groove formed on malleable metal material. Portions of the surrounding metal are hammered against the precious stone and thus the stone is set. The width of the flat area of the bit can be varied to adapt to differing sizes of stones and/or channels. Another bit may be formed so that its extremity is pointed. This bit may be used to strike a piece of precious metal a multitude of times with its point to engrave a design onto the piece or to give the piece a unique grainy texture. These bits are made from metals that are harder than the precious metals that they are used on.

There presently exists a bit that is formed to accommodate a diamond at its working end. The diamond is held into place by four tabs extruding from the bit and folded into the diamond, much like the manner a diamond is clasped and set on a ring. Because of the hardness of the diamond, and because the diamond tip is shaped to a sharp point, the result of hammering a surface of gold, for a example, with the diamond point is a unique, highly expensive-in-appearance texture that glistens and is known as "laser diamond brilliance". The drawback of this diamond-tipped bit is that after a certain amount of use, the diamond eventually loosens from its position because of the constant pressure exerted on the metal tabs. The loosened diamond significantly affects the quality and accuracy of the craftsmanship performed on the jewelry. In some instances, stress may cause a tab to break and render the bit unusable altogether.

SUMMARY OF THE INVENTION

The present invention provides a much more sturdy and precise implement which overcomes the prior art deficiencies mentioned above. This is accomplished by providing for a new improved manner of mounting the diamond to the tip of a bit. Instead of using tabs to hold a diamond onto a tip of a bit, a portion of the diamond is actually embedded into the bit itself while a rim portion of the bit circumferentially restrains the diamond in a fixed position. A seat comprised of a bore, slightly larger in width than the diamond itself, is formed on the end of a bit. The depth of the seat is less than the length of the diamond. The end of the diamond opposite to the pointed end is located at the rear surface of the seat. The rim of the bore circumferentially fixes the diamond into the seat. The result is a diamond-tip bit where the diamond is more durably and steadfastly bonded to the bit than that known previously in the art. The invention is a precise and long-lasting implement that permits the jeweler to create better crafted objects of art while at the same time, realizing him savings in costs and repairs.

In a further embodiment, the bit is constructed so that the diamond tip, once worn through prolonged use can be replaced by another diamond tip. In this manner, the bit can be used again and again while only changing the portion that is worn through use, the diamond tip. The result is a precise and long-lasting implement that realizes a jeweler further savings of time and money by permittin him to reuse the bit by easily and quickly changing the diamond tip.

BRIEF DESCRIPTION OF THE DRAWINGS

In describing the invention, reference will be made to the accompanying drawings wherein:

FIG. 1 is a perspective exploded view of the invention and the hand-held hammering device to which the invention is attached for use.

FIG. 2 is a cross-sectional view of the invention through its length as indicated in Figure 1 as 2-2.

FIG. 3 is an enlarged cross-sectional view of the tip of the invention showing a diamond as it is to be placed into the compartment.

FIG. 4 is an enlarged cross-sectional view of the tip of the invention after the diamond has been placed into the compartment.

FIG. 5 is a further view of the invention of Figure 4 as pressure is applied to the tip of the invention causing the rim of the compartment to fold into the diamond.

FIG. 6 is a side view of a second embodiment of the invention.

FIG. 7 is a perspective exploded view of the second embodiment of the invention.

FIG. 8 illustrates the second embodiment of the invention providing a cross-sectional view through the retaining piece showing the shank entreating the diamond against the annular rim.

FIG. 9 is an enlarged cross-sectional view of the tip of the invention showing the shank entreating the diamond against the annular rim.

## DETAILED DESCRIPTION OF THE PREFERRED EMBODIMENTS

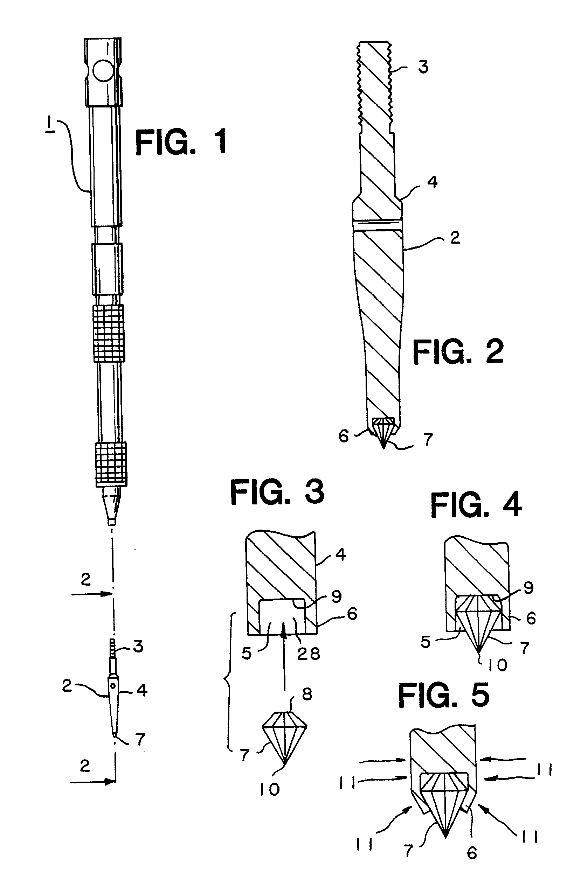

Referring now to the drawings, there is illustrated in Figure 1 a view of the bit 2 and the implement it is used with, a jeweler's hammer 1. The hammer 1 is a hand-held device that provides a piston-like motion at one end. One example of the hammer is made by Badeco, model number 101329, 222-RL. Bits of varying shapes can be attached to the driven portion of the hammer 1. The bits, so driven, can be used by a jewelry designer to place differing designs, patterns and textures on a piece of jewelry.

Figure 2 is a cross sectional view of a first embodiment of the bit from the viewpoint 2-2 of Figure 1. The scale has been exploded to better depict the bit. The bit is comprised of a threaded portion 3 and a shaft portion 4. The bit 1 is normally screwed into the hammer 1 through the threaded portion via a corresponding threaded receiving portion on the driven portion of the hammer 1. As best viewed in Figure 3, a seat 28 comprising bore 5 and rear surface 9 is formed on the end of the bit 2 opposite to the threaded portion 3. Surrounding the bore 5 is an annular rim portion 6. The annular rim portion 6 surrounds, clasps and firmly anchors a diamond 7, after it is deformed, as will be seen with reference to Figure 5.

Referring to Figures 3 and 4, the diamond 7 has been shaped so that it has a flat rear portion 8 that sits flush against the rear surface 9. Opposite the flat rear portion 8, the diamond 7 has a sharp point 10 that is used to contact against precious metals and other materials used in the jewelry-making process. The annular rim portion 6, that portion of the bit that peripherally surrounds the bore 5, has been pressure- fitted 11 and folded circumferentially into the side of the diamond 7 to hold it firmly in place. While the rear portion 8 and rear surface 9 are both shown as being flat, those skilled in the art will appreciate that other shapes for these surfaces may also be used.

The process of making the bit involves taking a shaft portion 4, forming a threaded portion 3 on one end and a seat 5 therethrough on the other end. A diamond 7, is shaped to have a flat rear portion 8 and a sharp point 10 opposite the flat rear portion 8. The diamond 7, shaped to be slightly smaller in width but longer in length than the seat 28, is then placed into the seat 28 with flat rear portion 8 flush against the rear surface 9. Pressure 11, strong enough to deform the metal comprising the bit, is then applied to the rim 6, causing it to fold and circumferentially clasp the diamond 7 onto the rear surface 9.

The pressure 11 may be exerted by any appropriate means. One preferred method is by using a press such as a Dake No. 0 Single Leverage and No. OS Wheel Operated Press, made by Dake of Grand Haven Michigan. The bit 2 is stably held in place under pressure rams by a clamping device with the bore 5 facing up toward the pressure rams. A pressure transferring sleeve, with one end having a cone-shaped bore formed to fit over without disturbing or contacting the centrally located diamond 7 while simultaneously being capable of exerting pressure on the peripherally located rims, is fitted over the annular rim portion of the bit and the diamond contained therein. Pressure is transmitted from the rams of the press, through the sleeve and onto the rim. The rims are pressured onto the diamond 7 so that diamond 7 is held firmly and solidly in place. Movement of the diamond 7 within the bit 2 is virtually eliminated.

The finished bit must be hard and capable of withstanding extreme stress without malleability. However the metal used must also be capable of deformation so that the rim 6 can be folded back into the diamond 7 to hold it in place. This is accomplished by first manufacturing the bit from a malleable metal, such as Truform, that has deep hardening qualities. Truform is a general purpose oil hardening, non-deforming alloy tool steel that is available through Jessup Co., 500 Green St., Washington City, PA. After the diamond is secured in its finished position, the bit, diamond and all, is then subjected to a hardening process that may include annealing, hardening, quenching and tempering. In particular the bit is oil quenched from 1475 degress Fahrenheit and tempered at 300 degrees Fahrenheit for 2 1/2 hours. The result is a bit with a Rockwell hardness of C62/64. This is only one manner of hardening the malleable metal. Other metals and variations of time and temperature may be used so long as the malleable metal is transformed into a hardness that will permit the bit to withstand the extreme stress that it will be subjected to during use.

Depending upon the shape of the diamond tip, the invention can be used for a variety of purposes. The multiple hammering of gold, silver or other precious metal with a sharp tip would impart a sparkling effect known as "laser diamond brilliance" to the metal. A tip of lesser pointedness could be used for engraving and designing. A flat tip could be used for hammering. Other precious stone can also be used. Diamond, of course, is the preferred stone since it is the hardest known substance. But other stones such as ruby or emerald may also be used so long as it is substantially harder than the metal that it is to be used on.

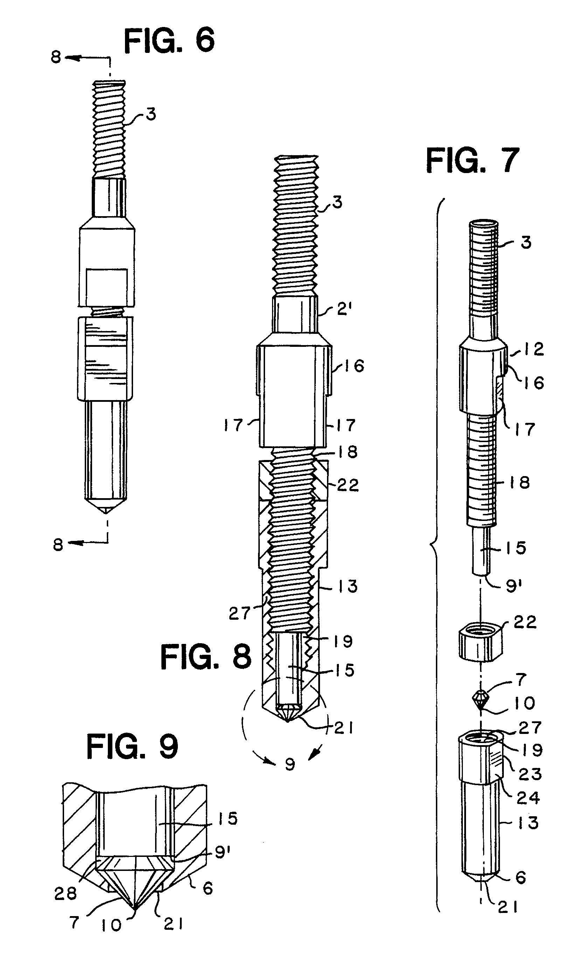

Figure 6 depicts a second and preferred embodiment of the invention, bit 2'. Bit 2' also circumferentially restrains a diamond tip in a fixed and stable position within a seat 28. However, in this second embodiment, the diamond tip can be easily removed from the bit 2' and replaced with another diamond tip.

Figure 7 is an exploded perspective view of the bit 2'. The bit includes a shaft 12 and a retaining piece 13. The bit 2' is normally screwed into the jeweler's hammer through threaded portion 3 located on the shaft via a corresponding threaded receiving portion on the driven portion of the hammer. However, other means can also be utilized to couple the bit 2' to the hammer. The shaft 12 has a securing shank 15 formed on the end opposite to the threaded portion 3. The extremity of securing shank 15 comprises surface 9¹.

In this second embodiment, the shaft 12 preferably has a midportion 16 which is of relatively greater diameter than the other portions of the shaft 12. The midportion 16 permits easier grasping and manipulation of the shaft 12. The midportion 16 has two opposing parallel flat surfaces 17 which permit a wrench or pliers to engage it so that a rotational force may be imparted to the shaft 12. Between the midportion 16 and the shank 15 are threads 18.

Retaining piece 13 has a bore 19 formed therethrough. The bore 19 has threads 27 formed preferably on a substantial part of its surface for engaging the threads 18 on shaft 12. One end of the retaining piece 13 tapers inward to form annular rim 6. The annular rim 6 defines an opening 21 which comprises a continuation of bore 19 but which is of lesser diameter than the other portions of bore 19. This embodiment also has a locking nut 22 which is threadably disposed on the threads 18 between the midportion 16 and the shank 15. The purpose of this nut 22 will be explained later. The retaining piece 13 may also have a raised portion 23 which is of greater diameter relative to other sections of the retaining piece 13, and, like the midportion 16, the raised portion 23 also preferably has two opposing parallel flat surfaces 24 that can be engaged by a wrench or pliers.

A sharpened diamond 7 is shaped so that a portion of it sits flush against the annular rim 6 while the sharpened point 10 of said diamond 7 protrudes out beyond opening 21. This is best seen in Figure 9.

As depicted in Figure 8, the retaining piece 13 receives shaft 12 through bore 19. The shaft 12 and retaining piece 13 are threadably engaged through the meshing of their respective threads 18 and 27. By rotating shaft 12 and retaining piece 13 with respect to each other, shank 15 advances within bore 19 toward annular rim 16 until surface 91 encounters and urges diamond 7 against annular rim 6. Tightening of the threadable engagement between shaft 12 and retaining piece 13 can be performed by hand. However, for a more secure interconnection, a wrench, pliers or other tool should be used to apply the necessary additional rotational force.

Once sufficient force is applied by the shank 15 to urge diamond 7 firmly against the annular rim 6, further locking means is used to discourage rotation of the shaft 12 with respect to the retaining piece 13. Any such unwanted rotation would cause shank 15 to retreat from its encounter with diamond 7 and result in a "loosened" diamond 7 during use of the bit. In the preferred embodiment, this further locking means is provided by locking nut 22. By tightening locking nut 22 against retaining piece 13, a compressive force is placed on the retaining piece 13, discouraging rotational movement between the retaining piece 13 and the shaft 12. It should be noted that this is only one manner of providing the desired locking means. Another possibility is inserting a screw perpendicular to the longitudinal axis of the bit through the retaining piece 13 and tightening the screw against the shank 15 sufficiently to hold shank 15 in place. Other means are also possible to provide the same function of immobilizing the shaft with respect to the retaining piece.

After prolonged use, even a diamond will become dull. However, instead of discarding the entire bit, the user can now simply unscrew the shaft 12 from the retaining piece 13, remove the worn diamond tip 7 and replace it with a new one. The shaft 12 is now screwed back into the retaining piece 13 and the locking nut 22 tightened. The bit is now again ready for use. Users will realize significant savings of time and money and the wasteful practice of replacing an entire bit just because the diamond is worn, can now be avoided.

The drawings and the foregoing description are not intended to represent the only form of the invention in regard to the details of its construction and manner of operation. Indeed, this apparatus and method can be adapted to a great many different situations. Changes in form and in the proportion of parts, as well as the substitution of equivalents, are contemplated as circumstances may suggest or render expedient; and although specific terms have been employed, they are intended in a generic and descriptive sense only and not for the purpose of limitation, the scope of the invention being delineated in the following claims.

## Claims

1. A diamond-tipped bit for use with a jeweler's hammer, the bit comprising:
a shaft portion having a threaded portion formed on one end and a bore formed on the other end, a rear surface in said bore and an annular rim portion surrounding said bore; and
a diamond shaped to have a rear portion which confronts said rear surface and to be slightly smaller in width than the diameter of said bore, said diamond having a length permitting it to protrude from said bore, said annular rim portion clasping said diamond around an entire circumference in a firm stationary position within said bore.

2. A bit as claimed in Claim 1 wherein said diamond has a pointed tip opposite said rear portion.

3. A bit as claimed in Claim 1 wherein said shaft portion is comprised of a shaft and a retaining piece, said shaft having a shank with a rear surface, said retaining piece having a bore therethrough and an annular rim, said retaining piece being threadably engaged with said shaft so that the rotation of said shaft with respect to said retaining piece determines the depth of said bore by the location of said rear surface.

4. A bit as claimed in Claim 1, wherein the length of said diamond is longer than a depth of said bore.

5. A bit as claimed in Claim 1, wherein the shaft portion forms one integral piece.

6. A method of producing a diamond-tipped bit for use with a jeweler's hammer, said method comprising the steps of:
forming a shaft having a bore therein, a rear surface in said bore and an annular rim portion;
shaping a diamond so that said diamond has a rear portion configured to be engagedly said read surface;
positioning said diamond within said bore so that said rear portion lies flush against said rear portion;
forming said rim portion so that said rim portion is circumferentially disposed back toward the diamond, wherein said diamond is held firmly in place within said bore.

7. A method as claimed in Claim 6 wherein said positioning and forming steps comprise:
providing a shaft having a shank, said shank having said rear surface at its extremity;
providing a retaining piece having a bore therethrough and an annular rim forming an opening of smaller diameter than that of said bore, said shaft being threadably engageable with said retaining piece;
inserting said diamond in retaining piece so that its rear portion faces away from said annular rim; and engaging said shaft in said retaining piece so that said rear surface is located flush against said rear portion of said diamond.

8. A method as claimed in Claim 4 wherein said forming step includes forming a threaded portion onto said shaft portion on an end of said shaft opposite to said bore.

9. A method as claimed in Claim 6 wherein said shaping step further comprises sharpening a point opposite to said flat rear portion of said diamond.

10. A method as claimed in Claim 6, wherein said forming step includes plastically urging said rim portion into contact with said diamond.

11. A bit for use with a jeweler's hammer and for retaining a replaceable diamond tip, said bit comprising:
a shaft having a shank;
a retaining piece having a bore formed therethrough, and an annular rim, said retaining piece receiving said shaft in said bore so that the diamond tip is restrained between said shank and said annular rim; and
means for engaging said shaft relative to said retaining piece.

12. A bit as claimed in Claim 11 wherein said engaging means comprises threads formed within said bore corresponding to threads formed on said shaft.

13. A bit as claimed in Claim 11 further comprising locking means for locking said shaft in a given position with respect to said retaining piece.

14. A bit as claimed in Claim 12 further comprising locking means for locking said shaft in a given position with respect to said retaining piece.

15. A bit as claimed in Claim 14 wherein said locking means comprises an adjustable nut threadably disposed on said threads of said shaft so that when the diamond tip is restrained between said shank and said annular rim, said adjustable nut is rotated until it abuts said retaining piece, locking said shaft in said given position.

16. A bit as claimed in Claim 15 further comprising a gripping portion, said gripping portion having beveled sides for insertion of a tool for tightening said shaft.

17. A bit for use with a jeweler's hammer and for retaining a replaceable diamond tip, said tip comprising:
a shaft, said shaft having a first threaded portion, a second threaded portion and a securing shank, said first threaded portion corresponding to threads located on the jeweler's hammer;
a retaining piece having a bore formed therethrough, said bore having threads corresponding to said second threaded portion of said shaft, said retaining piece having an annular rim, said annular rim forming an opening of smaller diameter than that of said bore, the diamond tip located within said bore contiguous to said annular rim, said retaining piece threadably receiving said shaft into said bore via said second threaded portion and said corresponding threads in said bore so that said shank entreats the diamond tip against said annular rim; and

means for locking said shaft relative to said retaining piece so that the diamond tip is firmly braced against said annular rim.

18. A method of producing a diamond-tipped bit for use with a jeweler's hammer, said method comprising the steps of:

providing a shaft having a shank;

providing a retaining piece having a bore formed therethrough and an annular rim, said annular rim forming an opening of smaller diameter than that of said bore;

placing a diamond tip into said bore;

inserting said shaft into said bore so that said shank urges the diamond tip against said annular rim; and

engaging said shaft relative to said retaining piece.

19. A method as claimed in Claim 18 wherein said engaging step comprises threading said shaft into said bore on threads formed on said shaft and corresponding threads formed on said bore.

20. A method as claimed in Claim 18 further comprising the step of locking said shaft in a given position with respect to said retaining piece.

FIG. 1

FIG. 2

FIG. 3

FIG. 4

FIG. 5

# FIG. 6

# FIG. 7

# FIG. 8

# FIG. 9

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,Y | GB-A-7 649 12   (CORONEL)<br>* the whole document *<br>— — — | 1-9,<br>11-20,10 | B 23 P<br>5/00<br>B 25 D 5/00 |
| Y | Industrial Diamond Review vol. 258, no. 22, 1 May 1962, LONDON GB pages 146 - 152; "aspects of pilkingtons"<br>* page 149, right-hand column - page 150, right-hand column; figures 9a-e *<br>— — — | 10 | |
| X | CH-A-2 346 33   (FENNER)<br>* page 2, left-hand column, line 30 - right-hand column, line 51; figure 1 *<br>— — — | 11,12,18,<br>19 | |
| X | GB-A-1 120 6   (ROSE)<br>* the whole document *<br>— — — | 11,12,18,<br>19 | |
| A | US-A-1 178 687   (STRICKLAND)<br>* page 1, lines 51 - 105; figures *<br>— — — — — | 1 | |

TECHNICAL FIELDS
SEARCHED (Int. Cl.5)

B 23 P
B 25 D
B 44 B

The present search report has been drawn up for all claims

| Place of search | Date of completion of search | Examiner |
|---|---|---|
| The Hague | 30 January 91 | WEIAND T. |